Europäisches Patentamt

European Patent Office

Office européen des brevets

(11) Veröffentlichungsnummer: **0 171 501**

**A1**

(19)

(12) # EUROPÄISCHE PATENTANMELDUNG

(21) Anmeldenummer: 85103273.0

(22) Anmeldetag: 21.03.85

(51) Int. Cl.⁴: **A 21 C 11/00**

(30) Priorität: 28.03.84 DE 3411428

(43) Veröffentlichungstag der Anmeldung:
19.02.86 Patentblatt 86/8

(84) Benannte Vertragsstaaten:
AT BE CH DE FR GB IT LI LU NL SE

(71) Anmelder: Müller, Günter
Niemensstrasse 7
D-7800 Freiburg i. Br.(DE)

(71) Anmelder: Dünnebier, Rolf Achim
Niemensstrasse 7
D-7800 Freiburg i. Br.(DE)

(72) Erfinder: Müller, Günter
Niemensstrasse 7
D-7800 Freiburg i. Br.(DE)

(72) Erfinder: Dünnebier, Rolf Achim
Niemensstrasse 7
D-7800 Freiburg i. Br.(DE)

(74) Vertreter: Schmitt, Hans, Dipl.-Ing. et al,
Dreikönigstrasse 13
D-7800 Freiburg(DE)

(54) Vorrichtung zur Herstellung von Pizza-Teiglingen.

(57) Eine Vorrichtung (1) dient zur Herstellung von backfertigen Pizza-Teiglingen und weist einen Eingabetrichter (2) für den zubereiteten Teig, darunter angeordnete Eingangswalzen (3) und ein mit Einzelformen (5) für die Teiglinge bestücktes Transportband (6) auf. Auf dem Transportband können die Teiglinge aus dem Teigband (4) ausgestochen und zu weiteren Bearbeitungsstationen wie z. B. Stationen zum Belegen der Oberseite der Pizza-Teiglinge transportiert werden. Um eine maschinell möglichst einfache Vorrichtung (1) zu erhalten, bei der also möglichst wenig Zwischenstationen für die Bearbeitung der Teiglinge und möglichst keine zusätzlichen Mehl-Einstreustationen vorhanden sein sollen, ist vorgesehen, daß der Abstand (A) der Eingangswalzen (3) zur Erzeugung des Teigbandes (4) bereits auf die Enddicke der Teiglinge eingestellt ist, daß die Ausgangsseite der Eingangswalzen (3, 3 a, 3 b) unmittelbar auf das Transportband (6) mit den Formen (5) oberhalb von diesen mündet und daß im Transport-Vorschub hinter der Mündung der Eingangswalzen wenigstens ein die Formen (5) und das darauf liegende Teigband (4) von oben beaufschlagendes Druckband (8) zum Anpressen des Teigbandes (4) an die Ränder (9) der Formen (5) und dadurch zum Ausstechen der Teiglinge vorgesehen ist, dessen Untertrum (8 a) synchron mit dem Transportband (6) in Vorschubrichtung bewegt wird.

./...

Fig.1

Herr
Günter Müller

Herr
Rolf Achim Dünnebier
Niemensstraße 7
7800 Freiburg i. Br.

## Vorrichtung zur Herstellung von Pizza-Teiglingen

Die Erfindung betrifft eine Vorrichtung zur Herstellung von Pizza-Teiglingen, mit einem Eingabetrichter od. dgl. für den zubereiteten und gekneteten Teig, darunter angeordneten Eingangswalzen und einem mit Einzelformen für die Teiglinge bestückten Transportband, auf welchem die Teiglinge aus einem Teigband ausgestochen und gegebenenfalls zu weiteren Bearbeitungsstationen wie z. B. stationen zum Belegen der Oberseite der Teiglinge transportiert werden.

Derartige Vorrichtungen sind zumindest im Prinzip bereits bekannt. Dabei ist bisher bei einem Beispiel aus der Praxis vorgesehen, daß ein von den Eingangswalzen gebildetes erstes Teigband auf einen Zwischenförderer überführt wird, auf welchem unter Zugabe von Mehl Querroller zu einer weiteren Auswalzung des Teigbandes vor allem in Querrichtung sorgen, wonach wiederum Formwalzen zum nochmaligen Auswalzen des Teigbandes in Förderrichtung dienen, die auf ein Übergabeband münden, das den Abstand zwischen dem Zwischen-Förderband und dem die Einzelformen aufweisenden Transportband überbrückt und das Teigband schließlich auf dieses Haupt-Transportband mit den Formen überführt. Dort kann mit Hilfe von auf die Formen abgestimmten Stößeln taktweise jeweils der entsprechende Teigling in die Form gestoßen werden, so daß der umgebende Teig des Teigbandes davon ge-

Mr/H                                                        /2

trennt wird. In an sich bekannter Weise kann dieser Festteig wiederum dem Eingabetrichter zugeführt werden.

Eine solche Vorrichtung ist aufwendig und führt auch beim Teigling selbst wegen der im Bereich von Walz-Stationen erforderlichen Mehlzugabe zu unbefriedigenden Ergebnissen.

Es besteht deshalb die Aufgabe, eine Vorrichtung der eingangs erwähnten Art zu schaffen, bei welcher der maschinelle Aufwand erheblich vermindert ist und gleichzeitig von der Konsistenz und dem Geschmack befriedigendere Teiglinge hergestellt werden können.

Die Lösung dieser Aufgabe besteht im wesentlichen darin, daß der Abstand der Eingangswalzen zur Erzeugung des Teigbandes auf die Enddicke der Teiglinge eingestellt ist, daß die Ausgangsseite der Eingangswalzen unmittelbar aus das Transportband mit den Formen oberhalb von diesen mündet und daß im Transport-Vorschub hinter der Mündung der Eingangswalzen wenigstens ein die Formen und das darauf liegende Teigband von oben beaufschlagendes Druckband und/oder wenigstens eine Druckwalze zum Anpressen des Teigbandes an die Ränder der Formen und dadurch zum Ausstechen der Teiglinge vorgesehen ist.

Auf Querroller und Endwalzen mit entsprechenden Zwischenförderbändern wird also verzichtet. Demgemäß muß das Teigband auch nicht mehrmals zusätzlich mit Mehl bestreut werden, um ein Haften des Teiges an diesen zusätzlichen Walzen zu verhindern. Somit ist nicht nur der maschinelle Aufwand vermindert, weil diese zusätzlichen Walzen und Roller vermieden werden, sondern gleichzeitig wird die für den Geschmack und die Konsistenz unzuträgliche Zugabe von Mehl vermieden. Versuche haben gezeigt, daß ein einmaliges Walzen des Teiges gleich auf die Enddicke der Teiglinge diesen eine wünschenswerte Konsistenz entsprechend derjenigen gibt,

/3

die bei einer Handfertigung solcher Teiglinge ebenfalls entsteht. In unerwarteter Weise wird also durch die Verminderung des maschinellen Aufwandes gleichzeitig auch das Produkt selbst verbessert.

Ausgestaltungen der Erfindung insbesondere betreffend die Einzelformen, das Andrückband sowie das Zusammenwirken von Andrückband und Transportband sind Gegenstand der Ansprüche 2 bis 8.

Vor allem bei Kombination einzelner oder mehrerer der in den Ansprüchen enthaltenen Merkmale und Maßnahmen ergibt sich eine Vorrichtung, mit welcher backfertige Pizza-Teiglinge mit geringstmöglichem maschinellem Aufwand automatisch maschinell hergestellt werden können, ohne bisherige Nachteile einer maschinellen Fertigung mit mehreren Mehl-Zugabestationen in Kauf zu nehmen. Die Vermeidung nachträglicher Mehlzugaben verbessert dabei nicht nur das Produkt selbst, sondern spart außerdem Material, nämlich dieses Mehl.

Nachstehend ist die Erfindung mit ihren ihr als wesentlich zugehörenden Einzelheiten anhand der Zeichnung noch näher beschrieben. Es zeigt in schematisierter Darstellung:

Fig. 1    eine Seitenansicht einer erfindungsgemäßen Vorrichtung mit einem Eingabetrichter, Eingangswalzen und einem Transportband,

Fig. 2    eine Draufsicht eines Teiles des Transportbandes mit größeren Formen und

Fig. 3    eine Draufsicht eines Teiles des Transportbandes mit kleineren Formen für Pizza-Teiglinge.

Eine im ganzen mit 1 bezeichnete Vorrichtung dient zur Herstellung von backfertigen Pizza-Teiglingen. Sie weist im wesentlichen einen Eingabetrichter 2 für den Teig und darunter angeordnete Eingangswalzen 3 zur Bildung eines Teigbandes 4 auf. Ferner gehört zur Vorrichtung 1 ein mit Einzelformen 5 für die Teiglinge bestücktes Transportband 6, auf welchem die Teiglinge aus dem Teigband 4 ausgestochen und gegebenenfalls zu weiteren, nicht zur Erfindung gehörenden Bearbeitungsstationen transportiert werden. Z. B. können die Teiglinge zu einer Station zum Beschichten der Oberseite mit Tomatensoße, Käse u. dgl. gebracht werden. Dabei ist vor der Station 5 mit dem Eingabetrichter 2 für den Teig und den Eingangswalzen 3 eine Zuführstrecke 7 des Transportbandes 6 zu erkennen, wo die Einzelformen 5 beispielsweise in entsprechende Vertiefungen des Transportbandes 6 eingesetzt werden können.

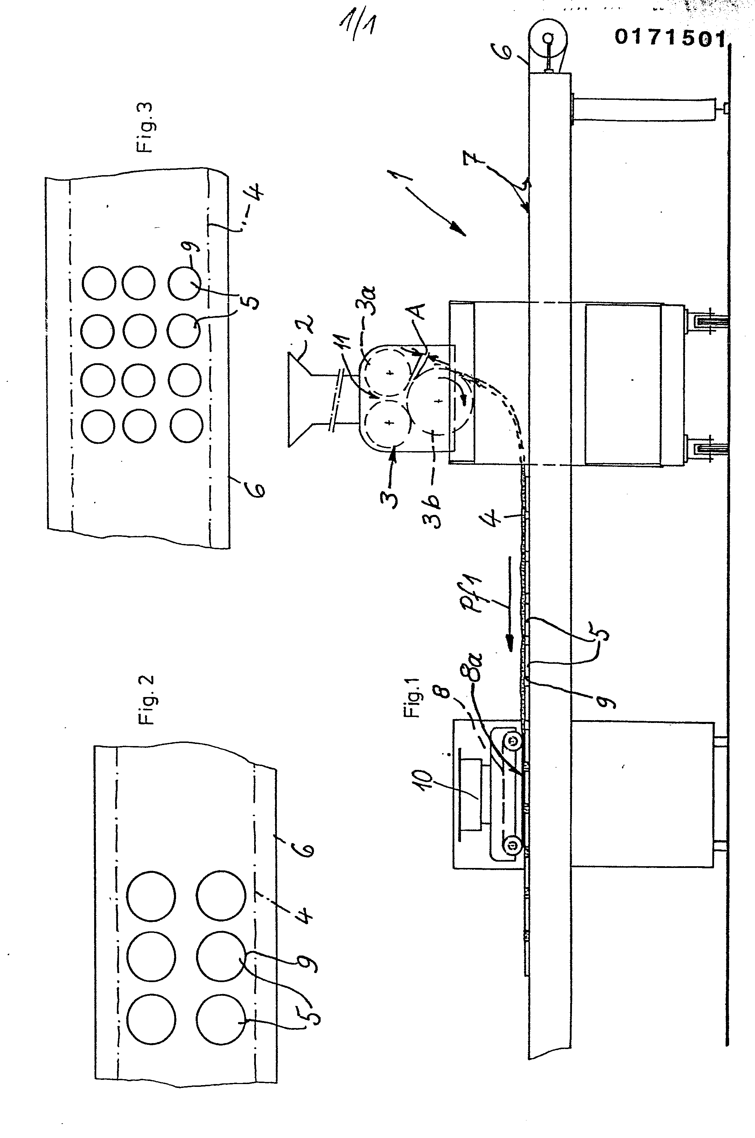

Erfindungsgemäß ist vorgesehen, daß der Abstand A am Austritt der Eingangswalzen 3 auf die Enddicke der Teiglinge eingestellt ist und die Ausgangsseite der Eingangswalzen 3 unmittelbar auf das Transportband 6 mit den Formen 5 oberhalb von diesen mündet und daß im Transport-Vorschub gemäß dem Pfeil Pf 1 in Fig. 1 hinter der Mündung der Eingangswalzen 3 ein die Formen 5 und das darauf liegende Teigband 4 von oben beaufschlagendes Druckband 8 zum Anpressen des Teigbandes 4 an die Ränder 9 der Formen 5 und dadurch zum Ausstechen der Teiglinge vorgesehen ist. Fig. 1 macht deutlich, daß die gesamte Vorrichtung 1 maschinell sehr einfach ist, da lediglich die Aufgabestation 5 und das Andrückband 8 an dem Transportband 6 angeordnet werden müssen, um fertige Teiglinge in den Formen 5 maschinell und selbsttätig erzeugen zu können.

Zweckmäßig ist es, wenn die Ränder 9 der Einzelformen 5 scharfkantig sind. Dadurch wird das Ausstechen der Teiglinge durch die von oben auf das Teigband 4 drückende Druckvorrichtung 10 erleichtert. Das Druckband 8 oder auch eine Druckwalze sind nämlich an einer Andrückvorrichtung 10

gelagert, die hydraulisch, pneumatisch oder durch Federn gegen das Transportband 6, die Formen 5 und den Teig 4 gerichtet sind. In Vorschubrichtung hinter dem Andrückband kann in an sich bekannter Weise eine nicht näher dargestellte Vorrichtung zum Entfernen des außerhalb der Formen 5 befindlichen Restteiges vorgesehen werden.

In Fig. 1 erkennt man andeutungsweise drei Eingangswalzen 3 zur Erzeugung des Teigbandes 4. Dabei haben zwei obere parallele Walzen einen ersten Einziehspalt 11 zwischen sich und eine dieser beiden Walzen, vorzugsweise die in Vorschubrichtung des Transportbandes 6 zurückliegende Walze 3 a weist mit einer darunter befindlichen größeren Walze 3 b den Walzspalt mit der Enddicke A des Teiglings auf, wobei die Drehrichtung der unteren dritten Walze 3 b so gewählt ist, daß ihre Unterseite sich in Richtung des Transportbandes 6 bewegt. Das Teigband, welches endgültig bereits an dem Abstand A zwischen den Walzen 3 a und 3 b entsteht, wird also im Ausführungsbeispiel in der Zeichnung im Uhrzeigersinn an der unteren Walze 3 b entlanggeführt und durch deren Drehung schon etwas in Vorschubrichtung des Transportbandes 6 gelenkt. Es legt sich dann auf einfache Weise auf dieses mit entsprechender Geschwindigkeit vorwärts bewegte Transportband und die darauf befindlichen Formen 5.

Das Andrückband 8 oder statt dessen eventuell Andrückwalzen sind mindestens so breit wie das Teigband, dessen Breite in den Figuren 2 und 3 erkennbar ist. Zweckmäßigerweise kann das Andrückband 8 etwa so breit wie das Transportband 6 mit den Pizzaformen 5 sein. Dabei ist das Untertrum 8 a des Andrückbandes 8 synchron mit dem Transportband 6 in Vorschubrichtung gemäß dem Pfeil Pf 1 bewegbar und überdeckt wenigstens zwei in Vorschubrichtung nebeneinander stehende Formen wenigstens teilweise gleichzeitig. Somit ergibt sich eine gute Auflage und die Gefahr, daß eine linienmäßige Druckberührung am Rand einer Form diese kippt, wird weitestgehend sowohl durch das Andrückband 8 als aber auch durch das Teigband 4 vermieden. Dabei kann das Transportband 6 mit den Formen 5 zumindest im Bereich des Andrückbandes 8 an seinem transportierenden Obertrum unterstützt sein, um den Andrück- und Ausstechkräften des Andrückbandes 8 den entsprechenden Widerstand entgegenzusetzen.

Ein erheblicher Vorteil dieser Anordnung besteht noch darin, daß Formen 5 mit relativ niedrigen Rändern 9 gewählt werden können. Entsprechend leicht können nach dem Formen die Teiglinge aus diesen Formen 5 wieder entnommen werden. Umso geringer ist auch die Gefahr, daß die Formen 5 aus ihrer definierten Lage auf dem Transportband 6 rutschen oder durch das Andrückband 8 od. dgl. Andrückvorrichtung verschwenkt oder gekippt werden, weil in der Regel solche Ränder 9 etwas schräg von unten nach oben auseinanderlaufen, um das Entnehmen des Teiglinges nach seiner Fertigstellung zu erleichtern.

Insgesamt ergibt sich eine im Aufbau sehr einfache Vorrichtung 1, mit der Pizza-Teiglinge backfertig gemacht werden können, ohne mehreren Auswalz-Vorgängen mit zugehörigem Einstreuen mit Mehl ausgesetzt zu werden. Es entstehen somit Teiglinge von günstiger Konsistenz, die später auch zu einem guten Backergebnis führen. Da der maschinelle Aufwand und insbesondere zusätzliche Auswalz-Vorrichtungen für das Teigband mit Zwischenbändern vermieden werden, sind auch weniger aufwendige Steuer- und Regelgeräte erforderlich, da nicht so viele Einzelstationen in ihren Arbeitsgeschwindigkeiten einander angepaßt und miteinander synchronisiert werden müssen.

Es hat sich gezeigt, daß es vorteilhaft ist, wenn die Einzelformen 5 im Randbereich ihres Bodens gelocht sind, vorzugsweise mehrere, z.B. vier bis sechs Lochungen gleichmäßig am Umfang verteilt haben. Dadurch legt sich der Teigling leichter und besser in die Form, ohne daß dem nachgeholfen werden muß.

Die Erfindung betrifft auch ein Verfahren zum Herstellen von Pizza-Teiglingen, die anschließend zu Pizzas weiterverarbeitet werden können, indem sie dann belegt und gebacken werden. Dieses Verfahren ist dadurch gekennzeichnet, daß zuerst der Teig als Teigband unmittelbar auf die Mehrfach-Backformen 5 aufgebracht, dann von oben etwa gleichmäßig gegen die Ränder 9 der Formen 5 gedrückt wird und dadurch die Teiglinge entsprechend den Formen 5 gebildet und in die Formen 5 eingelegt werden. Die bisher bei der Herstellung solcher Teiglinge übliche Verfahrensweise, das Teigband auf einem Zwischenförderer zu befördern und auszuwalzen und mit Hilfe von auf die Formen abgestimmten Stößeln Teiglinge jeweils in die Backformen zu stoßen, wird also aufgegeben im Interesse einer wesentlich einfacheren und schnelleren Herstellung durch das vorerwähnte Verfahren.

Besonders zweckmäßig ist es, wenn das Teigband 4 kontinuierlich auf die Formen 5 aufgebracht wird, die mit gleicher Geschwindigkeit wie das Teigband 4 in gleicher Richtung vorgeschoben werden. Da eine Zwischenförderung des Teigbandes vor dem Aufbringen auf die Formen vermieden wird, kann entsprechend einfach und auch schnell gearbeitet werden.

Darüber hinaus können in vorteilhafter Weise aufgrund dieses Verfahrens und mit Hilfe der erfindungsgemäßen Vorrichtung einfach und schnell hergestellte Teiglinge zu weiteren Bearbeitungsstationen wie zum Belegen und zum Backofen weitertransportiert werden, so daß insgesamt auch eine kontinuierliche Herstellung von Pizzas durchgeführt werden kann, wobei in vorteilhafter Weise die einzelnen Stationen so hintereinander liegen, daß sie sich nicht gegenseitig stören oder beeinträchtigen können.

Alle in der Beschreibung, der Zusammenfassung, den Ansprüchen und der Zeichnung dargestellten Merkamle und Konstruktionsdetails können sowohl einzeln, als auch in beliebiger Kombination miteinander wesentliche Bedeutung haben.

- Ansprüche -

Herr
Günter Müller

Herr
Rolf Achim Dünnebier
Niemensstraße 7
7800 Freiburg i. Br.

UNSERE AKTE - BITTE STETS ANGEBEN!

E 85 214 MR

## Vorrichtung zur Herstellung von Pizza-Teiglingen

### Ansprüche

1. Vorrichtung (1) zur Herstellung von Pizza-Teiglingen, mit einem Eingabetrichter (2) od. dgl. für den Teig, darunter angeordneten Eingangswalzen (3) und einem mit Einzelformen (5) für die Teiglinge bestückten Transportband (6), auf welchem die Teiglinge aus einem Teigband (4) ausgestochen und gegebenenfalls zu weiteren Bearbeitungsstationen wie z. B. Stationen zum Belegen der Oberseite der Teiglinge transportiert werden, d a d u r c h  g e k e n n z e i c h n e t , daß der Abstand (A) der Eingangswalzen (3) zur Erzeugung des Teigbandes (4) auf die Enddicke der Teiglinge eingestellt ist, daß die Ausgangsseite der Eingangswalzen (3, 3 a, 3 b) unmittelba auf das Transportband (6) mit den Formen (5) oberhalb von diesen mündet und daß im Transport-Vorschub hinter der Mündung der Eingangswalzen wenigstens ein die Formen (5) und das darauf liegende Teigband (4) von oben beaufschlagendes Druckband (8) und/oder wenigstens eine Druckwalze zum Anpressen des Teigbandes (4) an die Ränder (9) der Formen (5) und dadurch zum Ausstechen der Teiglinge vorgesehen ist.

2. Vorrichtung nach Anspruch 1, dadurch gekennzeichnet, daß die Ränder (9) der Einzelformen (5) scharfkantig sind.

3. Vorrichtung nach Anspruch 1 oder 2, dadurch gekennzeichnet, daß das Druckband (8) oder die Druckwalze an einer Andrückvorrichtung (10) gelagert ist, die hydraulisch, pneumatisch oder durch Federn od. dgl. gegen das Transportband (6), die Formen (5) und den Teig (4) gerichtet sind.

4. Vorrichtung nach einem der Ansprüche 1 bis 3, dadurch gekennzeichnet, daß hinter dem Andrückband (8) in an sich bekannter Weise eine Vorrichtung zum Entfernen des außerhalb der Formen (5) befindlichen Restteiges vorgesehen ist.

5. Vorrichtung nach einem der Ansprüche 1 bis 4, dadurch gekennzeichnet, daß vorzugsweise drei Eingangswalzen (3) zur Erzeugung des Teigbandes (4) vorgesehen sind, wobei zwei obere parallele Walzen einen ersten Einziehspalt (11) zwischen sich haben und eine dieser beiden Walzen, vorzugsweise die in Vorschubrichtung des Transportbandes (6) zurückliegende Walze (3 a) mit einer darunter befindlichen größeren Walze (3 b) den Walzspalt mit der Enddicke (A) des Teiglinges aufweist, wobei die Drehrichtung der unteren dritten Walze (3 b) so gewählt ist, daß ihre Unterseite sich in Richtung des Transportbandes (6) bewegt.

6. Vorrichtung nach einem der Ansprüche 1 bis 5, dadurch gekennzeichnet, daß das Andrückband (8) oder die Andrückwalze mindestens so breit wie das Teigband (4), vorzugsweise etwa so breit wie das Transportband (6) mit den Pizzaformen (5) ist.

7. Vorrichtung nach einem der vorstehenden Ansprüche, dadurch gekennzeichnet, daß das Untertrum (8 a) des Andrückbandes (8) synchron mit dem Transportband (6) in Vorschubrichtung bewegbar ist und vorzugsweise wenig-

0171501

stens zwei in Vorschubrichtung nebeneinanderstehende Formen wenigstens teilweise gleichzeitig überdeckt.

8. Vorrichtung nach einem der Ansprüche 1 bis 7, dadurch gekennzeichnet, daß das Transportband (6) mit den Formen (5) zumindest im Bereich des Andrückbandes (8) oder der Andrückwalze an seinem transportierenden Obertrum unterstütz ist.

9. Vorrichtung nach einem der Ansprüche 1 bis 8, dadurch gekennzeichnet, daß die Einzelformen (5) im Randbereich ihres Bodens gelocht sind, vorzugsweise mehrere, z.B. vier bis sechs Lochungen gleichmäßig am Umfang verteilt haben.

10. Verfahren zur Herstellung von Pizza-Teiglingen aus einem Teig, der in Backformen (5) eingefüllt wird, dadurch gekennzeichnet , daß zuerst der Teig als Teigband (4) ausgewalzt und unmittelbar auf die Mehrfach-Backformen (5) aufgebracht und dann von oben etwa gleichmäßig gegen die Ränder (9) der Formen (5) gedrückt wird und daß dadurch Teiglinge entsprechend den Formen gebildet und in die Backformen (5) eingelegt werden.

11. Verfahren nach Anspruch 10, dadurch gekennzeichnet, daß das Teigband (4) kontinuierlich auf die Formen (5) aufgebracht wird, die mit gleicher Geschwindigkeit wie das Teigband (4) vorgeschoben werden.

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-2 989 932 (W.W.EGEE u.a.)<br><br>* Spalte 2, Zeilen 33-65; Spalte 3, Zeilen 13-43; Figuren 1,2 * | 1-8,10,11 | A 21 C 11/00 |
| | --- | | |
| Y | US-A-3 947 597 (C.A.KIEFFABER)<br><br>* Insgesamt * | 1-4,6,7,8 | |
| | --- | | |
| Y | GB-A- 341 686 (T.AND T.VICARS u.a.)<br>* Insgesamt * | 5 | |
| | --- | | |
| Y | US-A-3 933 068 (J.J.REJSA)<br>* Insgesamt * | 10,11 | |
| | --- | | |
| A | US-A-4 389 176 (C. NENCI) | | **RECHERCHIERTE SACHGEBIETE (Int. Cl.4)** |
| | --- | | A 21 C |
| A | DE-C- 852 831 (A.APPLETON) | | |
| | --- | | |
| A | GB-A- 603 476 (T.AND T.VICARS LTD. u.a) | | |
| | --- | | |
| A | US-A-4 362 497 (I.LIFSHITZ) | | |
| | ----- | | |

Der vorliegende Recherchenbericht wurde für alle Patentansprüche erstellt.

| Recherchenort<br>DEN HAAG | Abschlußdatum der Recherche<br>28-06-1985 | Prüfer<br>FRANKS N.M. |
|---|---|---|